# EUROPEAN PATENT SPECIFICATION

(11) **EP 0 850 281 B1**
(45) Date of publication and mention of the grant of the patent: **05.12.2001**
(21) Application number: 96930248.8
(22) Date of filing: 11.09.1996
(51) Int. Cl.: C09D 11/00

(54) **A JET INK COMPOSITION**
TINTENSTRAHLTINTE
COMPOSITION D'ENCRE PAR JET

(30) Priority: 15.09.1995 US 3815; 10.06.1996 US 661180
(43) Date of publication of application: 01.07.1998
(73) Proprietor: Marconi Data Systems Inc., Wood Dale, Illinois 60191-1073 (US)
(72) Inventor: LENT, Bruce, Alan, Oak Park, IL 60302 (US); DENG, Godwin, Guojien, Schaumburg, IL 60193-107 (US); EZPELETA, Jose, Fernandez, Chicago, IL 60660-1115 (US)
(74) Representative: McGowan, Nigel George
(86) International application number: GB9602239
(87) International publication number: WO9710307

(56) References cited:
- DATABASE WPI Week 7903 Derwent Publications Ltd., London, GB; AN 7905039B XP002023985 & JP,A,53 140 105 (DAINIPPON TORYO) , 6 December 1978
- DATABASE WPI Week 8927 Derwent Publications Ltd., London, GB; AN 89197132 XP002023986 & JP,A,01 135 683 (AGENCY OF IND. SCI. TECH.) , 29 May 1989

## Description

The present invention relates to fluorescent jet printing ink compositions suitable for bar coding, covert marking, or other security markings.

There is a need for security marking on articles to prevent theft and fraud. Thus, security markings are needed on a variety of articles including envelopes, checks, bankbills, shares, securities, stamps, identity cards, passports, tickets, certificates, and other articles. The security markings help prevent forgery of the articles. In addition, the invisible security markings can be applied anywhere on the article as opposed to the conventional black on white marking which is useful only on areas of white or other light colored background on articles.

The marking of articles with bar codes for identification and sorting is known. Infrared readable bar codes have been developed to meet the need for. invisible security markings. For example, Japanese Patent Application Kokai No. 58-45999 discloses a method wherein a voting card is printed with an infrared absorbing bar code, and the printed area is covered by smearing with an ink which has high light absorptivity in the visible region but low light absorptivity in the infrared region. This method has the problem of disagreeable visual image because of the black color of the ink which has low light absorptivity in the infrared region.

This method also has the problem that it is incapable of perfectly concealing the bar code in order that it would be invisible to the unaided eye.

U.S. Patent 5,366,252 discloses a method of concealing the infrared absorbing bar code. According to this invention, an infrared absorbing mark formed by printing on a substrate is covered up by smearing with an ink having high light absorptivity in the visible region and pervious to light in the infrared region, thus forming a colored concealing layer on the mark, and on this colored concealing layer there is further provided a white concealing layer by printing on the colored concealing layer with an ink containing a white pigment and an extender pigment of which at least part of the particles are those having an average size of 3 to 20 microns.

The aforesaid methods have the disadvantage that the infrared absorbing bar codes are visible to the unaided eye and need to be physically concealed. The concealment of the bar code results in covering up of a portion of the article, thereby adversely affecting the aesthetics of the article.

Fluorescent materials have been considered for marking purposes. It is known that fluorescence is the property of a material to emit radiation as the result of exposure to an excitation radiation from some other source. The emitted radiation persists only as long as the material is subjected to radiation. The fluorescent radiation generally has a wavelength longer than that of the excitation radiation.

There has been significant developmental activity in the area of fluorescent inks suitable for security markings. For example, U.S. Patent 5,093,147 discloses a method for providing intelligible markings that are virtually invisible to the unaided eye on the surface of an article. The invention is based on a jet ink containing an organic laser dye that is poorly absorptive in the visible range of about 400 to 700 nm, is absorptive of radiation in the near infrared range of at least 750 nm, and fluoresces in response to radiation excitation in the infrared range at a wavelength longer than that of the exciting radiation.

U.S. Patent 4,736,425 discloses a method of marking fiduciary documents requiring authentication by the use of certain fluorescent chelates. The method comprises introducing only a part of the elements forming the chelate onto the document to be marked and subsequently contacting the document for authentication purpose with the missing part of the elements forming the chelate to effect the synthesis of the fluorescent chelate. The chelate thus formed is excited by ultraviolet radiation and the fluorescence radiation is detected.

U.S. Patent 4,450,595 discloses a jet ink that can be used to mark documents such as bank checks for automatic identification. The ink contains certain phenoxazine derivative dyes, to be visible to the unaided eye, and to fluoresce in the near infrared region (650 to 800 nm) upon activation using an activating light having a wavelength in the range of 550 to 700 nm. The ink that is visible to the unaided eye is unfortunately not suitable for many security marking applications.

Thus, there exists a need for fluorescent inks that are invisible to the unaided eye, are excitable in the ultraviolet region and fluoresce in the visible light range. In order to meet the above need, the colorant used to prepare the ink should not absorb significantly in the visible range of from 400 nm to about 700 nm. The colorant must be excitable by ultraviolet radiation having a wavelength of from about 275 nm to about 400 nm and fluoresce in the visible range.

Further, the fluorescence of any other materials present in the articles should not interfere with the fluorescence of the colorant. Certain optical brighteners are used in articles such as paper and textiles to improve the whiteness of the articles. Examples of such optical brighteners are well known and include 4,4'-bis(triazin-2-ylamino)stilbene-2,2'-disulfonic acids, 2-(stilben-4-yl)naphthotriazoles, 1,3-diphenyl-2-pyrazolines, and bis(benzoxazole-2-yl) derivatives. These and other optical brighteners are fluorescent whitening agents which absorb ultraviolet radiation in the range of from about 275 to about 400 nm and fluoresce in the range of from about 380 to about 500 nm, with peak fluorescent emission in the range of from about 420 to about 440 nm. It is preferable therefore, that the fluorescent wavelength of the colorant is greater than the wavelength of the fluorescent emission of the optical brighteners. Thus, it is preferred that the colorant fluoresce at a wavelength greater than about 575 nm.

Bar codes are generally applied by the method of jet printing. Ink jet printing is a well-known technique by which printing is accomplished without contact between the printing device and the substrate on which the printed characters are deposited. Briefly described, ink jet printing involves the technique of projecting a stream of ink droplets to a surface and controlling the direction of the stream electronically so that the droplets are caused to form the desired printed message on that surface.

Reviews of various aspects of ink jet printing can be found in these publications: Kuhn et al., *Scientific American,* April, 1979, 162-178; and Keeling, *Phys*. *Technol., 12(5),* 196-303 (1981). Various ink jet apparatuses are described in the following U.S. patents: 3,060,429, 3,298,030, 3,373,437, 3,416,153, and 3,673,601.

In general, an ink jet ink composition must meet certain rigid requirements to be useful in ink jet printing operations. These relate to viscosity, resistivity, solubility, compatibility of components, and wettability of the substrate. Further, the ink must be quick-drying and smear resistant, resist rubbing, and be capable of passing through the ink jet nozzle without clogging, and permit rapid cleanup of the machine components with minimum effort.

Thus, in order to be able to produce security markings using fluorescent jet inks by jet printing, there exists a need for jet ink compositions meeting certain rigid requirements. There exists a need for jet ink compositions having suitable viscosity, resistivity, solubility, compatibility of components and wettability of the substrate. Further, there exists a need for a fluorescent jet ink composition that is quick-drying and smear resistant, resists rubbing, and is capable of passing through the ink jet nozzle without clogging, and permits rapid cleanup of the machine components with minimum effort. Further, there exists a need for a jet ink composition having a fluorescent colorant that is excitable by ultraviolet radiation in the wavelength range of from about 275 nm to about 400 nm and fluoresces in the visible range. There exists a further need for a jet ink composition that produces a mark that is invisible to the unaided eye, excitable by ultraviolet radiation, and fluoresces in the visible range, and preferably in the range of wavelength greater than the fluorescing wavelength of the optical brighteners and other additives present in the articles that may interfere with the fluorescence due to the colorant.

It is therefore an object of the present invention to provide an ink composition comprising a colorant that is excitable by ultraviolet radiation and fluoresces in the visible range. It is a further object of the present invention to provide a jet ink composition that provides a mark that is completely or substantially invisible to the unaided eye and when excited by ultraviolet light, fluoresces in the range of wavelength longer than the fluorescing wavelength of optical brighteners and other additives present in white substrates.

It is a further object of the present invention to provide an improved method of identifying objects, the method comprising jet printing a security mark on articles using a fluorescent jet ink such that the mark is invisible to the unaided eye and fluoresces in the visible range upon excitation by an activating light in the ultraviolet region.

According to a first aspect of the present invention there is provided a jet ink composition suitable for marking on white or light colored substrates comprising a colorant, an ink carrier, and more than one binder resin including a binder resin selected from the group consisting of polyurethane, polyvinylpyrrolidone, and ethylcellulose, and wherein said mark is completely or substantially invisible to the unaided eye and is visible only when excited by ultraviolet light, and said colorant comprises a rare earth metal and a chelating ligand, absorbs light at a wavelength of from about 275 nm to about 400 nm, and fluoresces at a wavelength of from about 575 nm to about 700 nm, and wherein a) when the rare earth metal is europium, dysprosium, or terbium, the chelating ligand is not dibenzoylmethane, and b) when the chelating ligand is dibenzoylmethane, the binder resin is not ethylcellulose or polyvinylbutryal.

According to a second aspect of the present invention there is provided a system for marking items with a desired mark for subsequent identification comprising a printing means for printing said mark on said items, wherein said printing means employs a jet ink composition according to the first aspect of the present invention.

According to a third aspect of the present invention there is provided a system for identifying items with a security mark comprising an excitation means for exciting said mark and a fluorescence detecting means for detecting the fluorescent emission of said mark, wherein said mark is made using a jet ink composition according to the first aspect of the present invention.

According to a fourth aspect of the present invention there is provided a method of providing a marking on an object for subsequent identification comprising applying onto said object a jet ink composition according to the first aspect of the present invention and removing all or substantially all of said ink carrier by evaporation or absorption into said object.

Preferably, the object is selected from the group consisting of envelopes, checks, bank bills, shares, securities, identity cards, passports, tickets, and certificates.

According to a fifth aspect of the present invention there is provided a method of identifying objects with markings formed by a method according to the fourth aspect of the present invention, which comprises subjecting said objects to exciting radiation having a wavelength of from 275 nm to 400 nm; reading said markings by detecting fluorescent radiation from said markings; and identifying said objects in response to the reading of said markings.

The jet ink composition of the present invention, in general, exhibits the following characteristics for use in ink jet printing systems: (1) a Brookfield viscosity of from about 1.8 centipoises (cps) to about 6 cps at 25°C; (2) an electrical resistivity of from about 20 ohm-cm to about 2,000 ohm-cm; and (3) a sonic velocity of from about 1200 meters/second to about 1700 meters/second.

The jet ink composition may further comprise other components such as a pH adjusting agent, a humectant, a biocide, and a defoamer.

The ink composition of the present invention can be prepared by any suitable method known to those of ordinary skill in the art. For example, the components of the composition can be combined and mixed in a suitable mixer or blender. A detailed discussion of each of the components, the characteristics of the inventive ink composition, and other aspects of the present invention is set forth below.

### INK CARRIER

Any suitable ink carrier, including aqueous and organic carriers and combinations thereof, can be used to prepare the jet ink composition of the present invention. The carrier should have sufficient solubility for the various components of the ink composition. In addition, the carrier should be easily dissipatable from the printed article by evaporation and/or absorption in the substrate.

Examples of suitable organic carriers include alcohols, aldehydes, ketones, ethers, esters, nitriles, and amides. A pure organic solvent or a mixture containing one or more of these solvents can be used as a carrier. The ink carrier may comprise water in addition to one or more of the aforesaid organic solvents. For instance, a mixture of an alcohol and water can be used as the carrier. Any suitable combination of water and alcohol can be used. Examples of suitable alcohols include methanol, ethanol, propanols, and butanols. It has been found that when LUMILUX™ Red CD 331, Red CD 332, or Red CD 335, discussed below in greater detail, is used as the colorant, the aqueous carrier should contain at least 20% by weight of ethanol to completely solubilize the colorant.

Any suitable amount of ink carrier can be used. Typically the carrier is used in an amount of from about 50% weight to about 99% by weight, preferably in an amount of from about 80% by weight to about 97% weight of the composition. When water is used as the carrier, in order to prevent the clogging of ink jet tip by the dissolved impurities present in the water, it is preferred that deionized water is used in the preparation of the ink composition.

### COLORANTS

The ink composition of the present invention comprises a suitable fluorescent colorant. Fluorescent colorants suitable for use in the present invention include pigments, dyes, and combinations thereof, that are excitable by ultraviolet radiation in the range of from about 275 nm to 400 nm and emit fluorescent radiation in the visible range. The preferred fluorescent colorants are invisible to the unaided eye (i.e., they have no significant absorption in the visible range of from about 400 nm to about 700 nm) and are excitable by ultraviolet radiation in the range of from about 275 nm to 400 nm and emit fluorescent radiation in the visible range. It is further preferred that when a white substrate is to be printed, the jet ink composition comprises a colorant which fluoresces in the range of wavelength greater than the fluorescent wavelength of the optical brighteners. The fluorescing wavelength is below about 700 nm, preferably below about 650 nm. Advantageously, the fluorescing wavelength ranges from about 575 nm to about 700 nm, and more preferably from about 600 nm to about 650 nm.

Suitable pigments include organic and inorganic pigments. When the pigments are insoluble in the carrier, it is preferred that the median particle size of the pigment is small, preferably less than about 15 microns, and more preferably in the range of from about 0.2 microns to about 2 microns.

An example of a suitable class of pigments is rare earth metal chelates, and preferably, lanthanide chelates. Examples of lanthanide chelates include those formed by the chelation of organic ligands such as acetylacetone, benzoylacetone, dibenzoylmethane, and salicylic acid with lanthanide ions such as neodymium, europium, samarium, dysprosium, and terbium ions. Examples of such complexes include europium acetylacetonate, samarium acetylacetonate, neodymium benzoylacetonate, terbium salicylate, and dysprosium benzoylacetonate. The aforesaid chelates can be prepared by any suitable method known to those of ordinary skill in the art. For example, a ligand such as acetylacetone can be reacted under suitable conditions with a rare earth metal halide such as europium trichloride to produce the rare earth metal chelate. For additional details, see, e.g., U.S. Patent 4,736,425. The above chelates absorb ultraviolet radiation and fluoresce in the visible range. The acetylacetonate of europium fluoresces with an emission line in the red region and this is particularly suitable for printing on white or light colored substrates.

Examples of commercially available fluorescent pigments suitable for use in the ink composition of the present invention include, but are not limited to, the rare earth metal chelates sold as LUMILUX C™ pigments by Hoechst-Celanese Corp. in Reidel-de Haen, Germany.

The LUMILUX C rare earth metal organic chelates have a melting point of from about 130°C to about 160°C and a bulk density of from about 500 kg/m³ to about 1100 kg/m³. Examples of organic LUMILUX C pigments include Red CD 316, Red CD 331, Red CD 332, Red CD 335, and Red CD 339, which are yellowish when unexcited and fluoresce in the orange-red region when excited by ultraviolet radiation. These pigments are soluble in organic solvents. Red CD 331, a preferred pigment and a derivative of europium-acetonate, is a yellowish powder having an emission peak at 612 nm, a melting point in the range of 153-155°C, and a density of 600 kg/m³. Red CD 331 is soluble in acetone, ethylacetate, ethanol, xylene, dichloromethane, dimethylformamide, n-hexane, and dibutylphthalate. Red 316 is a rare earth acetylacetonate. Red CD 332, a rare earth biketonate, has a melting of 135-138°C and a density of 500 kg/m³. Red CD 335, an europium chelate, has a melting point of 133°C and a density of 1030 kg/m³.

Additional examples of suitable LUMILUX pigments include Red CD 105, Red CD 106, Red CD 120, and Red CD 131. These are inorganic pigments. Red CD 105 is white when unexcited, fluoresces in the orange-red region when excited by ultraviolet radiation, and has a median particle size of 7 microns. Red CD 106 is white when unexcited, fluoresces in the orange-red region when excited by ultraviolet radiation, and has a median particle size of 6 microns. Red CD 120 is white when unexcited, fluoresces in the red region when excited by ultraviolet radiation, and has a median particle size of 2.7 microns. Red CD 131 is white when unexcited, fluoresces in the red region when excited by ultraviolet radiation, and has a median particle size of 6.5 microns. It is preferred that the particle size of the aforesaid pigments is further reduced by suitable means including grinding and crushing for use in the preparation of the jet ink composition.

Any suitable amount of the colorant can be used to prepare the jet ink composition of the present invention. If the ultraviolet absorptivity or the fluorescent emission intensity is high, then a small amount of the colorant is sufficient. If the ultraviolet absorptivity or the fluorescent emission intensity is low, then the amount of the colorant used should be increased. The colorant is used preferably in an amount of from about 0.1% by weight to about 2% by weight, and more preferably in an amount of from about 0.5% by weight to about 1.6% by weight of the jet ink composition. Excessive amount of colorant will increase the cost of the ink composition.

### BINDER RESINS

The jet ink composition of the present invention includes more than one binder resin including a binder resin selected from the group consisting of polyurethane, polyvinylpyrrolidone, and ethylcellulose. The binder resins serve to immobilize or increase the adhesion of the colorant, particularly on non-porous articles such as plastic and glassine materials. It is preferred that the binder resins are soluble in the ink carrier. It is further preferred that the binder resins have sufficient adhesion to the substrate following the dissipation of the ink carrier.

Ethylcellulose can be prepared by any method known to those of ordinary skill in the art, including by the reaction of ethyl chloride with alkali treated cellulose. Ethylcellulose is commercially available from Dow Chemical Co. in Midland, Michigan, as ETHOCEL™, in several grades. The ethoxyl content of ethylcellulose ranges from 45.0% to 52.0% by weight of ethylcellulose. The most common ones have an ethoxyl content of 45.0% to 49.5%, corresponding to the degree of substitution of 2.25 to 2.58 ethoxy groups per anhydroglucose unit. The "Standard" grade ETHOCEL has an ethoxyl content of 48.0% to 49.5%, and the "Medium" grade ETHOCEL has an ethoxyl content of 45.0% to 47.0% by weight of ethylcellulose. The ETHOCELs are available in a variety of molecular weights as reflected by the various viscosities of the polymers which range from about 3 to about 220 cps when measured as follows. The viscosity was measured as 5% solutions at 25°C in an Ubbelohde viscometer, in a solvent of 60% toluene and 40% ethanol for Medium products, and in a solvent of 80% toluene and 20% ethanol for Standard products. Thus, Standard #4 has a viscosity of 3-5.5 cps, Standard #7 has a viscosity of 6-8 cps, Standard #10 has a viscosity of 9-11 cps, Standard #20 has a viscosity of 18-22 cps, and Standard #45 has a viscosity of 41-49 cps, and Medium #50 has a viscosity of 45-55 cps, Medium #70 has a viscosity of 63-85 cps, Medium #100 has a viscosity of 90-110 cps. Standard #4 ETHOCEL is a preferred ethylcellulose binder resin. Several of the above ETHOCELs are available in Premium and Industrial grades.

Any suitable polyvinylpyrrolidone (PVP) that has the desired solubility can be utilized in the preparation of the jet ink of the present invention. PVP can be prepared by the polymerization of N-vinylpyrrolidone monomer by methods known to those of ordinary skill in the art, including free radical or redox polymerization methods. An example of a suitable commercially available PVP is the POVIDONE™ USP grade PVP, sold as PLASDONE™ brand PVP by GAF Chemicals Corp. in Wayne, New Jersey. PLASDONE PVP is available in several types, ranging in molecular weight from about 8,000 to about 1,200,000 Daltons, including the K-25, K-26/28, K-29/32, C-15, C-30, and K-90 types. K values of K-25, K-26/28, K-29/32, C-15, C-30, and K-90, are respectively, 25, 26-28, 29-32, 15, 30, and 90. The C grade PVP is pyrogen-free. The K-value is related to the intrinsic viscosity [η] and molecular weight of the polymer by the following expressions:
- [η] =: 2.303 (0.001 K + 0.000075 K²)
- [η] =: kMv^{a},
where Mv is the viscosity average molecular weight, k = 1.4x10⁻⁴, and a = 0.7.

PVP of viscosity average molecular weight in the range of about 20,000 to about 50,000 Daltons is preferred. K-29/32 is a preferred PVP, having a viscosity average molecular weight of approximately 38,000 Daltons. An example of a suitable PVP that is commercially available is the PVP K-30 from ISP Technologies in Wayne, New Jersey. PVP K-30 is soluble in common solvents such as alcohol and water.

When a combination of PVP and polyurethane was employed as the binder, higher emission intensities and better print quality were obtained. The improvement in print quality led to better adhesion and more uniform drop placement, particularly on non-porous portions of mail that required bar coding. Examples of the non-porous portions include plastic and glassine type materials.

Flexible thermoplastic polyurethane resins can be used in the preparation of the ink compositions of the instant invention. Flexible thermoplastic polyurethane resins are produced by the reaction of diols and diisocyanates. Examples of diols include ethylene glycol, propylene glycol, propanediol, butanediol, polyethyleneglycol, polypropyleneglycol, polyethyleneglycol adipate diol, polyethyleneglycol succinate diol, polytetrahydrofuran diol, and the like. Examples of diisocyanates include 2,4-tolylene diisocyanate, 2,6-tolylene diisocyanate, 4,4'-diphenylmethane diisocyanate, hexamethylene diisocyanate, and the like. Polyurethanes made from polypropylene glycol and 4,4'-diphenylmethane diisocyanate are preferred.

Polyurethanes having weight average molecular weight in the range of from about 4,000 to about 12,000 are preferred and polyurethanes having weight average molecular weight in the range of from about 7,000 to about 9,000 are further preferred.

Examples of preferred polyurethanes that are useful in the present invention include, but are not limited to, the flexible thermoplastic polyurethane solutions sold under the commercial name of SURKOPAK™ by Kane International Corp. (Mitchanol), Rye, New York. Several grades of polyurethanes are sold under this name and include SURKOPAK 2135, SURKOPAK 5299, SURKOPAK 5244, SURKOPAK 5255, SURKOPAK 2X, SURKOPAK 5322, SURKOPAK 5311, and SURKOPAK XL. The physical properties of the polyurethane solutions are presented in Table 1 below.

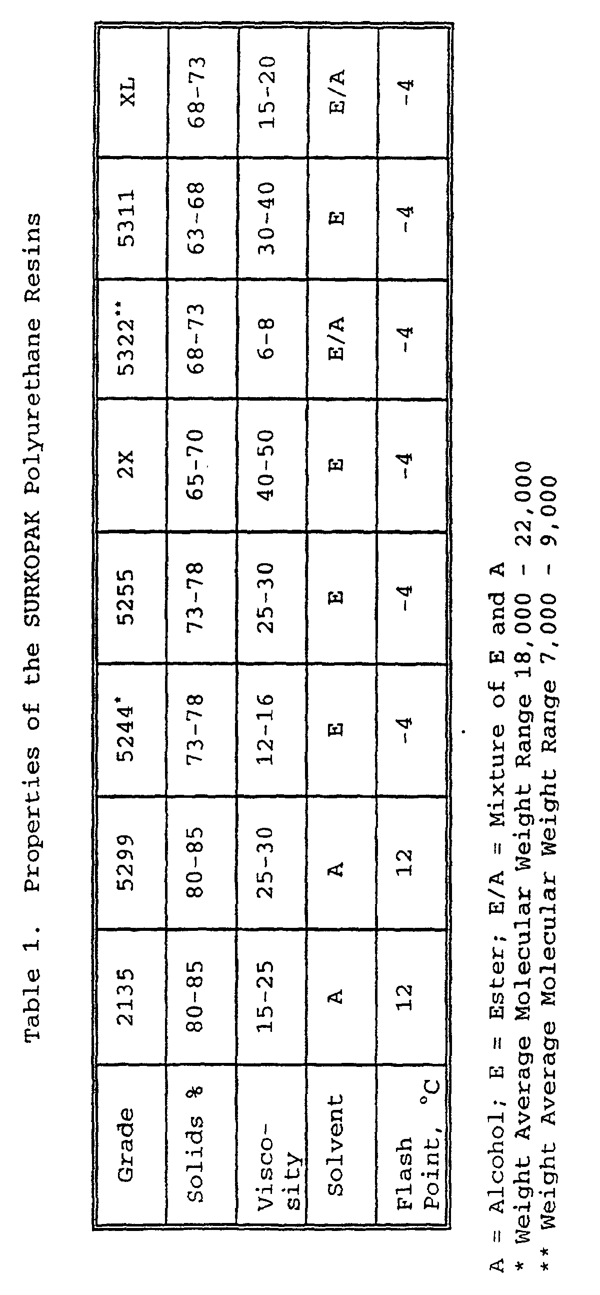

These SURKOPAK polyurethanes are non-reactive and are essentially free of isocyanate groups. Among these preferred polyurethane solutions, SURKOPAK 5322 and SURKOPAK 5244 are further preferred. SURKOPAK 5322, a polyurethane composed of polypropylene glycol and 4,4'-diphenylmethane diisocyanate, is sold as a solution in a mixed solvent containing ethyl acetate and isopropanol.

Any suitable amount of the binder resins can be used in the preparation of the jet ink composition. The binder resins are preferably in an amount of from about 1% by weight to about 15% by weight of the ink composition, and more preferably in an amount of from about 1% by weight to about 13% by weight of the jet ink composition. When a combination of polyurethane and another binder resin is used, any suitable combination can be used, preferably the polyurethane resin is in excess over the other resin. For example, when PVP and polyurethane are used in the combination, the PVP is used in an amount of 1-2% by weight of the ink composition and the polyurethane is used in an amount of from about 3-10% by weight of the ink composition. Excessive amounts of the binder resins may adversely affect the viscosity of the jet ink composition.

### ELECTROLYTES

The jet ink composition of the present invention may further comprise an electrolyte to obtain the desired electrical resistivity of the jet ink composition. Any suitable electrolyte known to those of ordinary skill in the art can be used. Examples of suitable electrolytes include alkali and alkaline earth metal salts such as lithium nitrate, lithium chloride, lithium thiocyanate, sodium chloride, potassium chloride, potassium bromide, calcium chloride, and the like, and amine salts such as ammonium nitrate, ammonium chloride, dimethylamine hydrochloride, hydroxylamine hydrochloride, and the like.

Any suitable amount of the electrolyte can be used to achieve the desired electrical resistivity. The electrolyte is preferably present in the jet ink composition in the range of from about 0.1% to about 2% by weight of the jet ink composition, and more preferably in the range of from about 0.4% by weight to about 0.6% by weight of the jet ink composition. Excessive amounts of electrolyte may cause clogging of the jet nozzle and adversely affect the electrical resistivity of the jet ink composition.

### pH ADJUSTING AGENTS

The jet ink composition of the present invention may comprise a pH adjusting agent if needed for the dissolution of the binder resin or the colorant. The desired pH will be dependent upon the particular solvent used and also to some extent upon the other components employed. Any suitable pH adjusting agent, acid or base, can be used so as to maintain the pH of the ink composition in the range of from about 4.0 to about 8.0, preferably in the range of from about 4.5 to about. 7.5.

### HUMECTANTS

The jet ink composition of the present invention may preferably comprise a humectant to prevent drying of the ink during the printing operation, as well as during storage of the ink. Humectants are hydrophilic solvents having high boiling points, preferably above 100°C, and more preferably in the range of from about 150°C to about 250°C. Any suitable humectant known to those of ordinary skill in the art can be used. Examples of suitable humectants include glycols such as ethylene glycol, propylene glycol, glycerin, diglycerin, diethylene glycol, and the like, glycol ethers such as ethylene glycol dimethyl ether, ethylene glycol diethylether, cellosolve, diethylene glycol monoethylether (Carbitol), diethylene glycol dimethylether, and diethylene glycol diethylether, dialkylsulfoxides such as dimethylsulfoxide, and other solvents such as sulfolane, N-methylpyrrolidinone, and the like. Preferred humectants include propylene glycol and diethyleneglycol monoethylether.

Any suitable amount of the humectant can be used, preferably in an amount of from about 0.5% by weight to about 5% by weight of the ink composition, and more preferably in the amount of from about 1% by weight to about 3% by weight of the ink composition. Excessive use of the humectant is to be avoided because it will increase the toxicity and/or the viscosity of the jet ink.

### BIOCIDES

The. ink composition of the present invention may additionally comprise a suitable biocide to prevent growth of bacteria, mould or fungus. Any suitable biocide can be used. DOWICIL™ 150, 200, and 75, benzoate salts, sorbate salts, and the like, methyl p-hydroxybenzoate (Methyl Paraben) and 6-acetoxy-2,2-dimethyl-1,3-dioxane (available as Giv Gard DXN from Givaudam Corp.) are examples of suitable biocides. The biocide can be present in the ink of the instant invention in an amount sufficient to prevent the attack by bacteria, mould, and fungus, which amount can be in the range of from about 0.05% by weight to about 0.5% by weight, preferably in the amount of from about 0.1% by weight of to about 0.3% by weight of the jet ink composition.

### DEFOAMERS

The jet ink composition of the present invention may preferably comprise a defoamer to prevent foaming of the ink during its preparation, as well as during the printing operation. Any suitable defoamer known to those of ordinary skill in the art can be used, preferably those that are miscible with the ink carrier.

Suitable defoamers include silicone defoamers and acetylenic defoamers. Examples of commercially available defoamers include silicone defoamers, such as DC-150, which can be obtained from Dow Corning Co., and SILVET I-77, 720, 722, or 7002, which can be obtained from Union Carbide Co. A preferred defoamer is XRM-3588E™, which can be obtained from Ultra Additives Inc., in Paterson, New Jersey. XRM-3588E is a defoamer generally used in metal cutting fluids, and has a Brookfield (RVF Spindle #4, 20 RPM, 25°C) viscosity of 6,000 to 9,000 centipoises, a specific gravity of 0.984-1.032, and a pH of 7.0-8.5 (50% solution). The chemistry of XRM-3588E has not been published, and is believed to be a silicone defoamer.

Examples of suitable acetylenic defoamers include the SURFYNOL™ brand defoamers which can be obtained from Air Products and Chemical Co. in Allentown, Pennsylvania. A number of Surfynol defoamers are available, including the preferred Surfynol 104 (2,4,7,9-tetramethyl-5-decyn-4,7-diol), which is available as a solution in a variety of solvents as Surfynol 104A, Surfynol 104E, Surfynol 104H, and Surfynol 104BC, and other Surfynols such as Surfynol GA, Surfynol SE, Surfynol TG, Surfynol PC, the dimethyl hexynediol, Surfynol 61, the dimethyl octynediol, Surfynol 82, the ethoxylated derivatives of the tetramethyl decynediol, Surfynol 440, Surfynol 465, and Surfynol 485, all of which can be used in the instant invention.

Any suitable amount of the defoamer effective to prevent foaming of the jet ink during preparation and use can be used. The amount used is preferably in the range of from about 0.01% by weight to about 1% by weight of the ink composition, and more preferably in the range of from about 0.05% by weight to about 0.35% by weight of the ink composition. The weight percentages given above refer to that of the active ingredient, and if the defoamer is sold in a diluted form, the amount of the diluted defoamer used will be proportionately increased. Excessive use of the defoamers is to be avoided because it may adversely affect the print quality such as the adhesion of the bar code to the substrate.

The jet ink composition of the present invention can be printed on any suitable substrate, including plain paper, KRAFT™ paper, bond paper such as GILBERT™ 25% or 100% cotton bond paper, silica coated paper, transparency materials, fabrics, plastics, polymeric films, and the like.

The following formulations in Table 2 further illustrate the present invention but, of course, should not be construed as in any way limiting its scope.

The formulations set forth in Table 2 gave satisfactory performance when tested using a VIDEOJET printer on plain paper and glassine materials. Formulation 3 gave a particularly superior performance by offering the highest emission intensity for a given amount of the dye.

**Table 2.**

| Representative Formulations of Invisible Fluorescent Jet Ink Compositions | | | | |
|---|---|---|---|---|
| Formulation No. | 1 | 2 | 3 | Supplier |
| Ethanol CDA19-200 proof | 91.1 | 81.4 | 85.05 | ASHLAND |
| Deionized water | ---- | 10 | ---- | ---- |
| Polyvinylpyrrolidone K30 | 1.25 | 1.2 | 2 | GAF |
| SURKOPAK 5322¹ | 5.5 | 5.5 | 11 | MITCHANOL |
| LUMILUX Red CD331 | ---- | 1.6 | ---- | Riedel-de Haen |
| LUMILUX Red CD332 | 1.6 | ---- | 1.35 | Riedel-de Haen |
| Lithium nitrate | 0.55 | 0.3 | 0.6 | FMC |
| Total (by weight) | 100 | 100 | 100 | |
| Physical Properties | | | | |
| Viscosity (cps) | 1.9 | 2.5 | 3.2 | |
| pH | 6.2 | 6.9 | 5.9 | |
| Resistivity (ohm/cm) | 1020 | 1199 | 1080 | |

| | | | | |
|---|---|---|---|---|
| 1. Polyurethane solution of approx. 68-73% by wt. | | | | |

## Claims

1. A jet ink composition suitable for marking on white or light colored substrates comprising a colorant, an ink carrier, and more than one binder resin including a binder resin selected from the group consisting of polyurethane, polyvinylpyrrolidone, and ethylcellulose, and wherein said mark is completely or substantially invisible to the unaided eye and is visible only when excited by ultraviolet light, and said colorant comprises a rare earth metal and a chelating ligand, absorbs light at a wavelength of from 275 nm to 400 nm, and fluoresces at a wavelength of from 575 nm to 700 nm, and wherein a) when the rare earth metal is europium, dysprosium, or terbium, the chelating ligand is not dibenzoylmethane, and b) when the chelating ligand is dibenzoylmethane, the binder resin is not ethylcellulose or polyvinylbutyral.

2. A jet ink composition as claimed in claim 1, wherein said composition has a Brookfield viscosity of from 1.8 centipoises (cps) to 6 cps at 25°C, an electrical resistivity of from 20 ohm-cm to 2,000 ohm-cm, and a sonic velocity of from 1200 meters/second to 1700 meters/second.

3. A jet ink composition as claimed in claim 1 or 2, wherein said chelating ligand is a biketonate, acetonate, or salicylate.

4. A jet ink composition as claimed in claim 3, wherein said chelating ligand is selected from the group consisting of acetylacetone, benzoylacetone, dibenzoylmethane, and salicylic acid.

5. A jet ink composition as claimed in any one of claims 1 to 3 wherein said rare earth metal comprises a lanthanide.

6. A jet ink composition as claimed in claim 5, wherein said rare earth metal is selected from the group consisting of neodymium, europium, samarium, terbium, and dysprosium.

7. A jet ink composition as claimed in claim 6, wherein said colorant is selected from the group consisting of europium acetylacetonate, samarium acetylacetonate, neodymium benzoylacetonate, terbium salicylate, dysprosium benzoylacetonate and europium biketonate.

8. A jet ink composition as claimed in any one of the preceding claims, wherein said ink carrier comprises an organic solvent.

9. A jet ink composition as claimed in claim 8, wherein said organic solvent comprises an alcohol.

10. A jet ink composition as claimed in any one of the preceding claims, further comprising an electrolyte.

11. A jet ink composition as claimed in claim 10, wherein said electrolyte comprises lithium nitrate.

12. A jet ink composition as claimed in claim 1 comprising ethanol in an amount of from 80% by weight to 97% by weight of said ink composition, lanthanide chelate in an amount of from 0.1% by weight to 2% by weight of said ink composition, said binder resins in an amount from 1% by weight to 15% by weight of said ink composition, and lithium nitrate in an amount of from 0.4% by weight to 0.6% by weight of said ink composition.

13. A system for marking items with a desired mark for subsequent identification comprising a printing means for printing said mark on said items, wherein said printing means employs a jet ink composition as claimed in any one of the preceding claims.

14. A system for identifying items with a security mark comprising an excitation means for exciting said mark and a fluorescence detecting means for detecting the fluorescent emission of said mark, wherein said mark is made using a jet ink composition as claimed in any one of claims 1 to 12.

15. A method of providing a marking on an object for subsequent identification comprising applying onto said object a jet ink composition as claimed in any one of claims 1 to 12 and removing all or substantially all of said ink carrier by evaporation or absorption into said object.

16. A method as claimed in claim 15, wherein said object is selected from the group consisting of envelopes, checks, bank bills, shares, securities, identity cards, passports, tickets, and certificates.

17. A method of identifying objects with markings formed by a method as claimed in claim 15 or 16, which comprises subjecting said objects to exciting radiation having a wavelength of from 275 nm to 400 nm; reading said markings by detecting fluorescent radiation from said markings; and identifying said objects in response to the reading of said markings.

## Patentansprüche

1. Jet-Tintenzusammensetzung, geeignet zum Schreiben auf weißen oder schwach gefärbten Substraten, umfassend ein farbgebendes Mittel, einen Tintenträger und mehr als ein Bindemittelharz einschließlich eines Bindemittelharzes, ausgewählt aus der aus Polyurethan, Polyvinylpyrrolidon und Ethylcellulose bestehenden Gruppe, und worin diese Beschriftung dem bloßen Auge vollständig oder im wesentlichen unsichtbar ist und nur sichtbar ist, wenn sie durch ultraviolettes Licht angeregt wird, und dieses farbgebende Mittel ein Seltenerdmetall und einen chelatierenden Liganden umfaßt, Licht bei einer Wellenlänge von 275 nm bis 400 nm absorbiert und bei einer Wellenlänge von 575 nm bis 700 nm fluoresziert, und worin a) im Fall, daß das Seltenerdmetall Europium, Dysprosium oder Terbium ist, der chelatierende Ligand nicht Dibenzoylmethan ist und b) im Fall, das der chelatierende Ligand Dibenzoylmethan ist, das Bindemittelharz nicht Ethylcellulose oder Polyvinylbutyral ist.

2. Jet-Tintenzusammensetzung wie in Anspruch 1 beansprucht, worin diese Zusammensetzung eine Brookfield-Viskosität von 1,8 Centipoise (cPs) bis 6 cPs bei 25°C, einen spezifischen elektrischen Widerstand von 20 Ohm-cm bis 2.000 Ohm-cm und eine Schallgeschwindigkeit von 1.200 Metern/Sekunde bis 1.700 Metern/Sekunde hat.

3. Jet-Tintenzusammensetzung wie in Anspruch 1 oder Anspruch 2 beansprucht, worin dieser chelatierende Ligand ein Biketonat, Acetonat oder Salicylat ist.

4. Jet-Tintenzusammensetzung wie in Anspruch 3 beansprucht, worin dieser chelatierende Ligand aus der aus Acetylaceton, Benzoylaceton, Dibenzoylmethan und Salicylsäure bestehenden Gruppe ausgewählt ist.

5. Jet-Tintenzusammensetzung wie in einem der Ansprüche 1 bis 3 beansprucht, worin dieses Seltenerdmetall ein Lanthanid umfaßt.

6. Jet-Tintenzusammensetzung wie in Anspruch 5 beansprucht, worin dieses Seltenerdmetall aus der aus Neodym, Europium, Samarium, Terbium und, Dysprosium bestehenden Gruppe ausgewählt ist.

7. Jet-Tintenzusammensetzung wie in Anspruch 6 beansprucht, worin dieses farbgebende Mittel aus der aus Europiumacetylacetonat, Samariumacetylacetonat, Neodymbenzoylacetonat, Terbiumsalicylat, Dysprosiumbenzoylacetonat und Europiumbiketonat bestehenden Gruppe ausgewählt ist.

8. Jet-Tintenzusammensetzung wie in einem der vorhergehenden Ansprüche beansprucht, worin dieser Tintenträger ein organisches Lösungsmittel umfaßt.

9. Jet-Tintenzusammensetzung wie in Anspruch 8 beansprucht, worin dieses organische Lösungsmittel einen Alkohol umfaßt.

10. Jet-Tintenzusammensetzung wie in einem der vorhergehenden Ansprüche beansprucht, weiter umfassend einen Elektrolyten.

11. Jet-Tintenzusammensetzung wie in Anspruch 10 beansprucht, worin dieser Elektrolyt Lithiumnitrat umfaßt.

12. Jet-Tintenzusammensetzung wie in Anspruch 1 beansprucht, umfassend Ethanol in einer Menge von 80 Gew.-% bis 97 Gew.-% dieser Tintenzusammensetzung, Lanthanidchelat in einer Menge von 0,1 Gew.-% bis 2 Gew.-% dieser Tintenzusammensetzung, diese Bindemittelharze in einer Menge von 1 Gew.-% bis 15 Gew.-% dieser Tintenzusammensetzung und Lithiumnitrat in einer Menge von 0,4 Gew.-% bis 0,6 Gew.-% dieser Tintenzusammensetzung.

13. System zum Beschriften von Gegenständen mit einer gewünschten Markierung für nachfolgende Identifizierung, umfassend eine Druckeinrichtung zum Drucken dieser Markierung auf diese Gegenstände, wobei diese Druckeinrichtung eine Jet-Tintenzusammensetzung, wie in einem der vorhergehenden Ansprüche beansprucht, verwendet.

14. System zum Identifizieren von Gegenständen mit einer Sicherheitsmarkierung, umfassend eine Anregungseinrichtung zum Anregen dieser Markierung und eine Fluoreszenz-Nachweiseinrichtung zum Feststellen der Fluoreszenzemission dieser Markierung, worin diese Markierung unter Verwendung einer Jet-Tintenzusammensetzung wie in einem der Ansprüche 1 bis 12 beansprucht, hergestellt worden ist.

15. Verfahren zum Aufbringen einer Beschriftung auf einem Objekt zur nachfolgenden Identifizierung, umfassend das Aufbringen einer Jet-Tintenzusammensetzung, wie in einem der Ansprüche 1 bis 12 beansprucht, auf dieses Objekt und Entfernen von allem oder im wesentlichen allem dieses Tintenträgers durch Verdampfen oder Absorption in dieses Objekt.

16. Verfahren nach Anspruch 15, bei welchem dieses Objekt aus der aus Umschlägen, Schecks, Banküberweisungen, Aktien, Wertpapieren, Personalausweisen, Pässen, Tickets und Urkunden bestehenden Gruppe ausgewählt ist.

17. Verfahren zum Identifizieren von Objekten mit Markierungen, hergestellt nach einem Verfahren, wie in Anspruch 15 oder 16 beansprucht, welches das Unterziehen dieser Objekte einer Anregungsstrahlung mit einer Wellenlänge von 275 nm bis 400 nm, Lesen dieser Markierungen durch Feststellen von Fluoreszenzstrahlung von diesen Markierungen und Identifizieren dieser Objekte aufgrund des Lesens der Markierungen umfaßt.

## Revendications

1. Composition d'encre pour imprimante à jet d'encre convenant au marquage sur des substrats blancs ou de couleur clair, comportant un colorant, un véhicule de l'encre et plus d'une résine liante comprenant une résine liante sélectionnée dans le groupe constitué par le polyuréthanne, la polyvinylpyrolidone et l'éthylcellulose, et où ladite marque est totalement ou sensiblement invisible à l'oeil nu et n'est visible que sous excitation par la lumière ultraviolette, et ledit colorant comprend un métal des terres rares et un ligand chélatant, absorbe la lumière à une longueur d'onde comprise entre 275 nm et 400 nm et est fluorescent à une longueur d'onde comprise entre 575 nm et 700 nm, et où a) lorsque le métal des terres rares est l'europium, le dysprosium ou le terbium, le ligand chélatant n'est pas le dibenzoylméthane et b) lorsque le ligand chélatant est le dibenzoylméthane, la résine liante n'est pas l'éthylcellulose ou le polyvinylbutyral.

2. Composition d'encre pour imprimante à jet d'encre selon la revendication 1, où ladite composition a une viscosité de Brookfield comprise entre 1,8 cp et 6 cp à 25°C, une résistivité électrique comprise entre 20 ohm/cm et 2000 ohm/cm et une vitesse sonique comprise entre 1200 m/s et 1700 m/s

3. Composition d'encre pour imprimante à jet d'encre selon la revendication 1 ou 2, où ledit ligand chélatant est un bicétonate, un acétonate ou un salicylate.

4. Composition d'encre pour imprimante à jet d'encre selon la revendication 3, où ledit ligand chélatant est sélectionné dans le groupe constitué par l'acétylacétone, la benzoylacétone, le dibenzoylméthane et l'acide salicylique.

5. Composition d'encre pour imprimante à jet d'encre selon l'une quelconque des revendications 1 à 3, où ledit métal des terres rares comprend un lanthanide.

6. Composition d'encre pour imprimante à jet d'encre selon la revendication 5, où ledit métal des terres rares est sélectionné dans le groupe constitué par le néodymium, l'europium, le samarium, le terbium et le dysprosium.

7. Composition d'encre pour imprimante à jet d'encre selon la revendication 6, où ledit colorant est sélectionné dans le groupe constitué par l'acétylacétonate d'europium, l'acétylacétonate de samarium, le benzoylacétonate de néodymium, le salicylate de terbium, le benzoylacétonate de dysprosium et le bicétonate d'europium.

8. Composition d'encre pour imprimante à jet d'encre selon l'une quelconque des revendications précédentes, où ledit véhicule de l'encre comprend un solvant organique.

9. Composition d'encre pour imprimante à jet d'encre selon la revendication 8, où ledit solvant organique comprend un alcool.

10. Composition d'encre pour imprimante à jet d'encre selon l'une quelconque des revendications précédentes, comprenant en outre un électrolyte.

11. Composition d'encre pour imprimante à jet d'encre selon la revendication 10, où ledit électrolyte comprend du nitrate de lithium.

12. Composition d'encre pour imprimante à jet d'encre selon la revendication 1, comprenant de l'éthanol en une quantité de 80 % en poids à 97 % en poids de ladite composition d'encre, un chélate de lanthanide en une composition de 0,1 % en poids à 2 % en poids de ladite composition d'encre, lesdites résines liantes en une quantité de 1 % en poids à 15 % en poids de ladite composition d'encre, et le nitrate de lithium en une quantité de 0,4 % en poids à 0,6 % en poids de ladite composition d'encre.

13. Système de marquage d'articles au moyen d'une marque désirée pour identification subséquente, comprenant un moyen d'impression pour imprimer ladite marque sur lesdits objets, où ledit moyen d'impression utilise une composition d'encre pour imprimante à jet d'encre selon l'une quelconque des revendications précédentes.

14. Système d'identification d'objets par une marque de sécurité comprenant un moyen d'excitation destiné à exciter ladite marque et un moyen de détection de fluorescence destiné à détecter l'émission de fluorescence de ladite marque, où ladite marque est réalisée en utilisant une composition d'encre pour imprimante à jet d'encre selon l'une quelconque des revendications 1 à 12.

15. Procédé de réalisation d'un marquage sur un objet pour identification subséquente, comprenant l'application sur ledit objet d'une composition d'encre pour imprimante à jet d'encre selon l'une quelconque des revendications 1 à 12 et l'élimination de tout ou sensiblement tout ledit véhicule de l'encre par évaporation ou absorption dans ledit objet.

16. Procédé selon la revendication 15, où ledit objet est sélectionné dans le groupe constitué par des enveloppes, des chèques, des billets de banque, des actions, des titres, des cartes d'identité, des passeports, des tickets et des certificats.

17. Procédé d'identification d'objets par des marquages formés par un procédé selon la revendication 15 ou 16, lequel comprend la soumission desdits objets à un rayonnement excitant ayant une longueur d'onde comprise entre 275 nm et 400 nm ; la lecture desdits marquages par détection du rayonnement fluorescent desdits marquages ; et l'identification desdits objets en réponse à la lecture desdits marquages.
